# EUROPEAN PATENT SPECIFICATION

(11) **EP 0 482 255 B1**
(45) Date of publication and mention of the grant of the patent: **02.08.1995**
(21) Application number: 90311614.3
(22) Date of filing: 23.10.1990
(51) Int. Cl.: F24C 15/32, A47J 39/00, A21B 1/48

(54) **Forced convection tunnel oven**
Tunnelofen mit gezwungener Konvektion
Four tunnel à convection forcée

(43) Date of publication of application: 29.04.1992
(73) Proprietor: PATENTSMITH II, INC., Dallas, Texas 75234-8910 (US)
(72) Inventor: Smith, Donald P., Dallas, Texas 75220, (US); Plumb, William W., Longview, Texas 75601 (US); High, Jarald E., Grand Prairie, Texas 75050 (US)
(74) Representative: Howick, Nicholas Keith

(56) References cited:
- WO-A-88/09124
- US-A- 1 797 677
- US-A- 4 831 238

## Description

The invention relates to an apparatus for transferring heat to or from food products adapted for commercial baking and food processing applications.

U.S. Patent No. 4831238 discloses a tunnel oven according to the preamble of claim 1.

Ovens of this sort, in which a conveyor transports food through a heated tunnel are generally cleaned with long vacuum tools. Some ovens are provided with inconvenient entrance ways through a small port requiring service personnel to crawl under the conveyor for cleaning and maintenance. These problems have not been addressed in US-A-4831238, or indeed in other prior art ovens referred to in US-A-4831238, namely US-A-4474498, 4154861, 4479776, 4492839 and 4523391.

According to the invention, there is provided a tunnel oven according to claim 1.

By way of example, one prior art oven, and an embodiment of an oven according to the invention will now be described with reference to the accompanying drawings, in which:-
Figure 1 is a front elevational view of a prior art forced convection tunnel oven;
Figure 2 is a top plan view thereof;
Figure 3 is a cross-sectional view taken along line 3-3 of Figure 1;
Figure 4 is a front elevational view of a gate to be mounted in the plenum for controlling air flow to an individual air dispensing duct; and
Figure 5 is a side elevational view of the gate illustrated in Figure 4;
Figure 6 is a front elevational view of an embodiment of a forced convection tunnel oven according to the invention;
Figure 7 is a top plan view of the tunnel oven of figure 6;
Figure 8 is a cross-sectional view taken along line 8-8 of Figure 6;
Figure 9 is a partially sectionalized view of a first form of a conveyor roller mounting; and
Figure 10 is a partially sectionalized view of a second form of a roller bearing mounting.

Numeral references are employed to designate like parts throughout the various figures of the drawing.

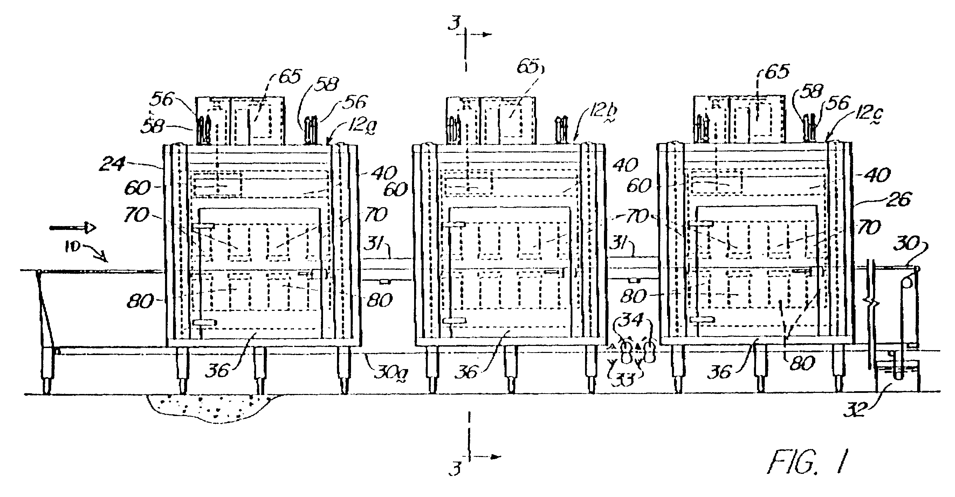

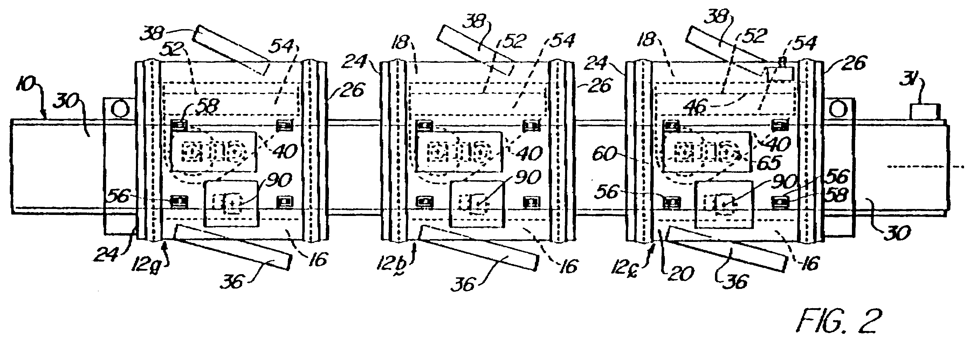

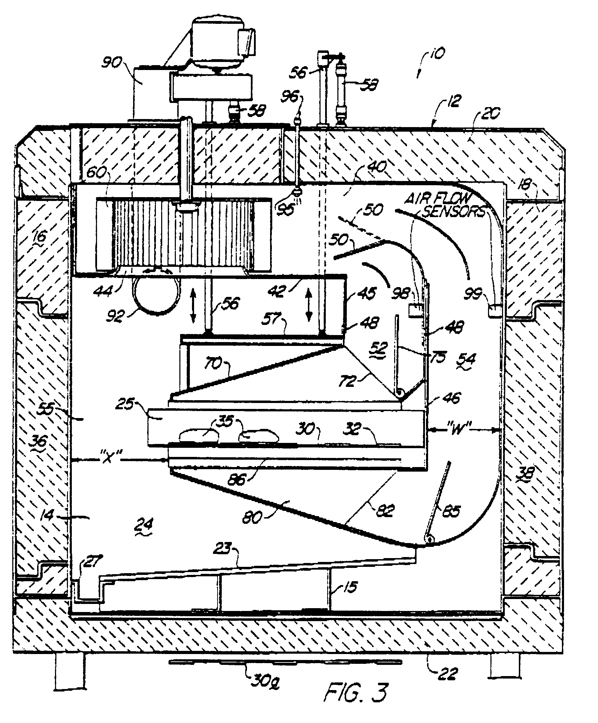

A prior art embodiment of the high volume force convection tunnel oven is generally designated by the numeral 10 in Figures 1 and 2 of the drawing. Cooking apparatus 10 generally comprises a plurality of spaced cabinets 12a, 12b, and 12c. As illustrated in Figures 2 and 3, each cabinet 12 has a cooking chamber 14 therein defined between front wall 16, back wall 18, top 20, bottom 22 and spaced end walls 24 and 26. A conveyor 30 transports food products 35 through an inlet opening 25 and an exit opening 27 in each cabinet 12. Conveyor 30 preferably comprises a wire mesh conveyor belt which is routed as illustrated in Figures 1 and 3 of the drawing to form an upper flight ex- tending through the cabinet and a lower flight 30a which extends below the floor or bottom wall 22 of each cabinet 12. As illustrated in Figure 2, a variable speed drive motor 31 positioned adjacent the discharge end of the conveyor rotates conveyor 30 at a controlled speed. Conveyor 30 is routed around suitable idler drums and preferably moves through a cleaning drum 32, adjacent belt cleaning spray nozzles 33 and cleaning brushes 34 for maintaining conveyor 30 in a clean sanitary condition.

A false bottom 23 is supported by legs 25 in an inclined position, as illustrated in Figure 3, above bottom wall 22 of the cabinet such that any drippings or liquid used for cleaning the compartment will be directed into a gutter 27 which is connected to a suitable drain for disposal of drippings and cleaning solutions.

Front wall 16 is provided with a door 36 while back wail 18 is provided with a door 38.

A generally horizontally disposed distribution chamber 40 is formed adjacent top 20 of the cabinet 12. Chamber 40 is formed between a generally horizontally disposed wall 42 having an air intake opening 44 formed therein and top wall 20 of the cabinet.

Two generally vertically disposed plenums 52 and 54 are formed adjacent back wall 18 of the cabinet, a first plenum 52 being formed between vertical walls 45 and 46 and a second plenum 54 being formed between vertical wall 46 and the back wall 18 of the cabinet. A gate 50 is pivotally secured adjacent the upper end of the central vertical wall 46 between the first plenum 52 and the second plenum 54 and is movable from the position illustrated in full outline in Figure 3 to the position illustrated in dashed outline for adjusting air flow from distribution chamber 40 through the vertically disposed plenums 52 and 54.

As best illustrated in Figures 2 and 3 of the drawing, upper fingers 70 are suspended from vertically movable hanger members.

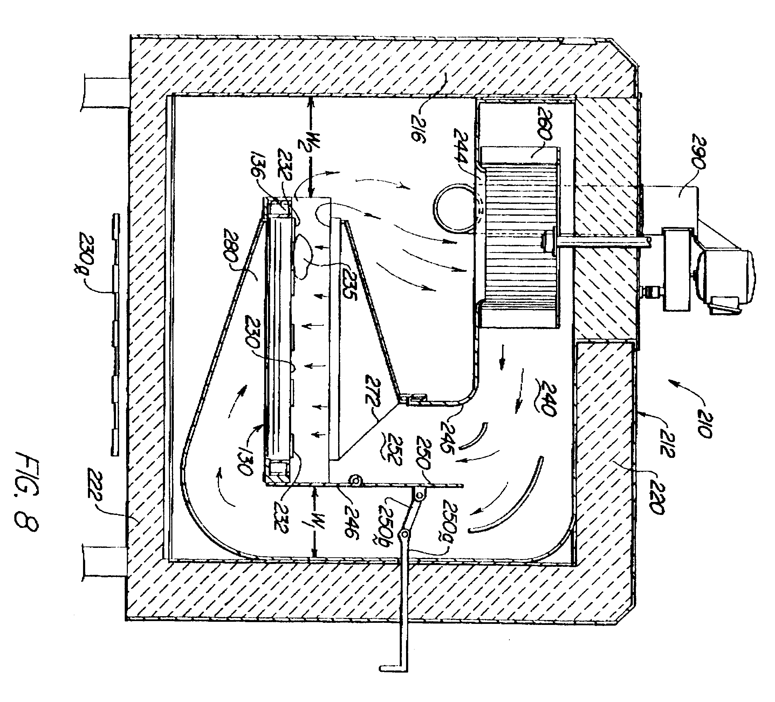

As best illustrated in Figure 8 of the drawing, upper fingers 270 are suspended from hanger members 256 to permit removal of the upper fingers 270 for cleaning. Passages in the upper air dispensing duct are formed to project a stream of air toward the upper surface of conveyor 230. Since the height or thickness of food products carried by conveyor 230 may vary, it is important that air dispensing passages in the upper duct be formed to project streams of air a sufficient distance to impinge against the surface of the conveyor if products carried by the conveyor are very thin. However, it is important that the passages be formed to form streams which are capable of impinging against the surface of relatively thick products, such as loaves of bread while permitting spent air which has impinged against the surface of the food product to return toward the intake of blower 260 without interfering with adjacent projected streams directed toward the surface of the conveyor.

It has been found that the lower surface of upper jet finger 70 should be spaced from the upper surface of conveyor 30 a distance which is in a range between four and six times the least dimension of air dispensing passages or orifices. Thus if the upper air dispensing duct 70 is spaced 127 mm (five inches) above the upper surface of the conveyor 30, the air dispensing passages in the lower surface of dispensing duct 70 would preferably be circular passages approximately 25,4 mm (one inch) in diameter or elongated slots having a width of approximately 25,4 mm (one inch).

The air directing openings in air dispensing duct 70 are selected for delivering an appropriate amount of air. The amount of air delivered in each successive zone in modules 12a, 12b and 12c of the tunnel oven 10 varies from zone to zone depending upon the heating requirements of the food product moving through the tunnel oven. Careful adjustment of the area of air delivery openings, velocity of air moving through the openings, temperature of the air and the speed of the conveyor 30 permit precise control of the cooking process.

For example, in baking ovens, the temperature in the first baking zone 12a is lower than in subsequent zones and the air volume and the velocity of the air are moderate. In the middle zone 12b of the tunnel oven, temperatures and air volumes are increased. In the final zone 13c, higher temperature and higher air velocities are employed to brown the crust on the bakery product.

For baking bread, high air velocity at moderate temperature early in the baking cycle in module 12a provides heat at low temperature so that the bread expands well without forming a strong crust. In the center of the baking cycle in module 12b, low air volume at similar temperature, does not overbake the outside of the loaves until the centers of the loaves are heated. A final higher air volume with higher temperature is adjusted to give the special type of crust desired.

The openings in the air ducts to provide a high volume of air, for example, 4% of the effected area of the product in the area under the air duct and the dead space between adjacent ducts 70. Moderate air volume is applied by employing fewer openings in each air dispensing duct 70 or by spacing the air dispensing ducts 70 further apart thus increasing the dead space between adjacent duct 70.

A fan or blower 60 is rotatably disposed in chamber 30 and is driven by a variable speed blower motor 65 mounted on top wall 20.

A plurality of horizontally spaced upper air dispensing ducts 70 are secured to spaced openings 72 which communicate with the interior of plenum 52 for dispensing air delivered through plenum 52 onto the upper surface of food products 35 carried by conveyor 40. A plurality of lower plenums 80 are spaced longitudinally of cooking compartment 14 and communicate with openings 82 in wall 46 of plenum 54 such that air flowing through plenum 54 enters lower dispensing ducts 80 and is dispensed onto the lower surface of food products 35 carried on conveyor 30.

Dampers 75 and 85 are preferably adjustably positioned adjacent openings 72 and 82 communicating with plenums 52 and 54 to provide independent adjustment of air flow through each of the spaced upper dispensing ducts 70 relative to each of the other upper dispensing ducts and to provide adjustment of flow from each of the lower dispensing ducts relative to each of the other lower dispensing ducts. Gate 50 and dampers 75 and 85 are of substantially identical construction, except that dampers 75 and 85 are shorter. For example if the spacing between interior end walls 24 and 26 is 1,83 m (six feet), gate 50 is approximately 1,83 m (six feet) long, while dampers 75 and 85 may be only 152 mm (six inches) long. It should be readily apparent that gate 50 can be manipulated for adjusting flow of air from chamber 40 to plenums 52 and 54 while dampers 75 and 85 can be manipulated for adjusting flow through individual ducts 70 and 80 for precisely adjusting the sequence and intensity of heat transfer to upper and lower surfaces of food product 35. A conventional air heating element such as gas fired heated 90 delivers heated air through supply duct 90 into cooking compartment 14 in each cabinet 12. The heated air is preferably dispensed adjacent the intake opening of blower 60.

For control of the humidity of recirculated air, a humidifier is provided. In the disclosed embodiment a steam spray nozzle 95 is connected through a steam line 96 to a suitable source of steam (not illustrated). The dispensing of steam through nozzle 95 into air distribution chamber 40 may be controlled manually or by a humidistat for automatic control of the relative humidity of air circulating through the system.

A pair of air flow sensors 98 and 99 are mounted in plenums 52 and 54, respectively to indicate the pressure or flow rate of air through ducts 52 and 54 to provide a visual indication of the relative flow rates of air through plenums 52 and 54. The flow rate through the plenums can be adjusted by manipulating gate 50 as hereinbefore explained.

As best illustrated in Figure 3 of the drawing, the edge 32 of conveyor 30 is spaced a distance "X" from front wall 16 of cabinet 12. If the sum of the areas of openings 86 in lower dispensing duct 80 through which air is supplied to the bottom surface of food product 35 is more than 6% of the effective area of the product or conveyor 30 being heated, the dimension designated "X" should be sufficient to permit the escape of spent air and should be larger than the area of openings 86. Fingers 70 and 80 are preferably relatively narrow ducts extending across the width of conveyor 30 and deliver a volume of air such that the total volume of air in cooking compartment 14 is recirculated at least once every two seconds or less.

In the embodiment illustrated in Figure 3 of the drawing, plenum 54 delivering air through lower dispensing ducts 80 to the lower surface of conveyor 30 is more than 10% of the width of conveyor 30 so that air can be supplied through openings 86 which are more than 6% of the effective area of conveyor 30 or product 35 swept by the air. The width "W" of plenum 54 through which air is delivered to lower dispensing ducts 80 is preferably at least three times the effective area of openings 86 in duct 80.

The return space 55 having a width "X" for spent air on the side of conveyor 30 away from plenums 52 and 54 must be more than 10% of the width of conveyor 30. The return space 55 is preferably 20% or more of the conveyor width in order to give maximum air flow from air supply openings 86 in lower ducts 80. Thirty percent or more is preferable. Thus, for a 1,22 m (four foot) wide conveyor 30, with air supply openings 86 in lower ducts 80 equalling 10% of the area of conveyor 30, the return space 55 preferably has a width "X" of at least 356 mm (14 inches).

It should be readily apparent that the cabinet illustrated in Figure 3 of the drawing may be inverted if it is deemed expedient to position blower 60 at the bottom of the compartment.

In the embodiment illustrated in Figure 3 of the drawing wherein blower 60 is located in the upper portion of cabinet 12, air is delivered through chamber 40 in a plane generally parallel to the surface of conveyor 30. When this air is turned 90 degrees at gate 50 into plenums 52 and 54, the air is advantageously spread through the length of each plenum in a direction generally longitudinally of back wall 18. Thus, air pressure adjacent dampers 75 and 85 is fairly uniform. Flow into each dispensing duct 70 and 80 is precisely controllable by dampers 75 and 85.

The spaced cabinets 12a, 12b and 12c are joined by generally rectangular shaped hollow tubular bridge sections 31, as illustrated in Figure 1 of the drawing. As hereinbefore described, conveyor 30 extends through openings in end walls 24 and 26 of each compartment and through tubular bridge members 31. The air distribution chamber 40 is spaced vertically from conveyor 30. Each blower 60 in the individual cabinets draws air from the cooking compartment in the respective cabinet and discharges the air into the distribution chamber in a plane generally parallel to the plane of conveyor 30.

It should be readily apparent that plenums 52 and 54 are adjacent the rear edge of conveyor 30 in the illustrated embodiment and that upper air ducts 70 and lower air ducts 80 communicate with the respective plenums and dispense air onto opposite sides of conveyor 30. The edge of conveyor 30 adjacent front wall 16 of the cabinet is spaced a distance indicated by "X" from front wall 16 to permit passage of air adjacent the front edge of the conveyor enroute to the blower 60 without interfering with flow of air from air dispensing ducts 70 and 80 toward the conveyor 30.

Air flow sensors 98 and 99 indicate the volume of air flowing through plenums 52 and 54. Gate 50 can be adjusted to adjust the air flow through the respective plenums while dampers 75 and 85 are adjustable for adjusting the air flow to individual distribution ducts 70 and 80.

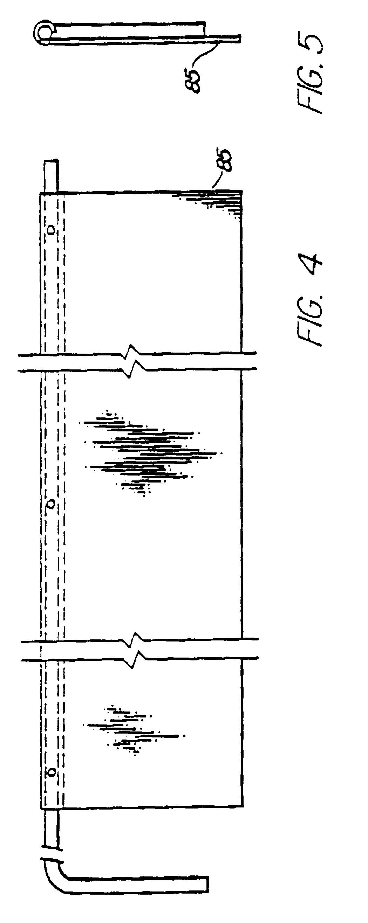

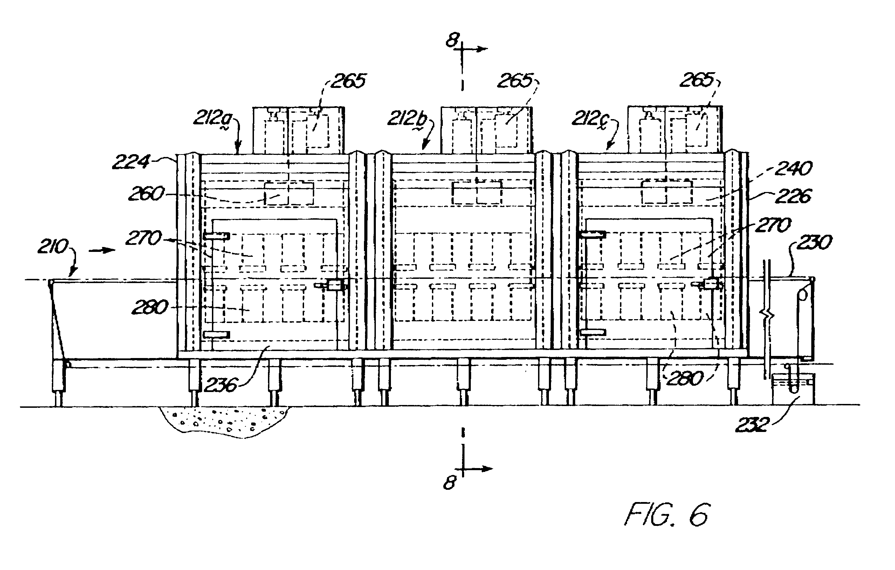

An embodiment of a forced convection tunnel oven according to the invention, generally designated by the numeral 200, is illustrated in Figures 6-10 of the drawing. Tunnel oven 200 is similar to the prior art embodiment generally designed by the numeral 10 in Figures 1-5 of the drawing. However, it will be noted that modules 212a, 212b and 212c are joined to form a single long continuous cooking chamber 214 extending through modules 212a, 212b, and 212c.

A conveyor 213 extends through cooking chamber 214 between a front wall 216 and a back wall 218.

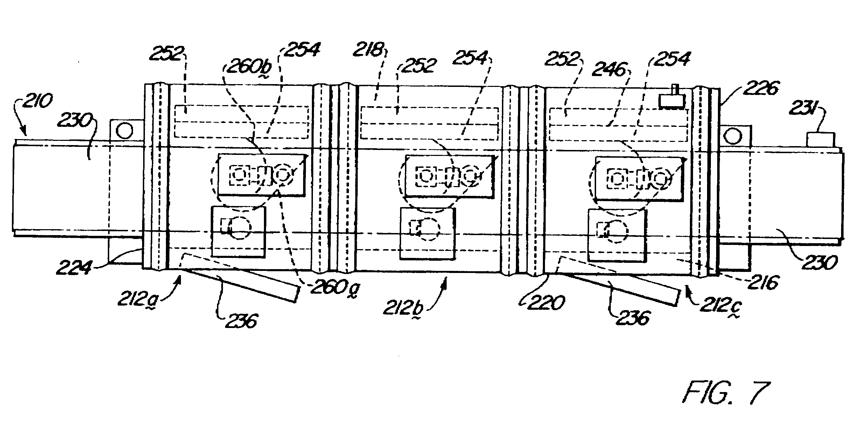

Referring to Figures 6 and 7 of the drawing, it will be noted that modules 212a, 212b, and 212c are connected. As best illustrated in Figure 7 of the drawing, one or more of the modules 212a and 212c is provided with an access door 236 while some of the other modules 212b are not provided with access doors. Heretofore, it has been necessary to provide access doors almost continuously along the length of conveyors to permit access to the inside of the oven for cleaning and maintenance.

As illustrated in Figure 7 of the drawing, blower 260 is positioned approximately in the center of module 212a intermediate opposite ends thereof and is provided with two bolutes 260a and 260b, inner ends of which are substantially diametrically opposed across blower 260. This construction permits air delivered by blower 260 to be distributed more uniformly through the chamber. It has been observed that positioning blower 260 as illustrated in Figure 7 of the drawing as compared to the position illustrated in Figure 2 of the drawing results in less air being drawn into the tunnel oven through the entrance 24 and less heated air being discharged through the exit opening 26 from module 213c.

As best illustrated in Figure 8 of the drawing, a gate 250 is pivotally secured to the upper edge of vertical partition wall 246 and is actuated by a push rod 250a, which extends through an opening in the rear wall 218. Push rod 250a is hingedly connected to a link 250b which is pivotally secured to gate 250. It should be readily apparent that longitudinal movement of push rod 250a rotates gate 250 for dividing and distributing the flow of air from air dispensing chamber 40 into plenums 252 and 254. Adjustment of gate 250 permits adjustment of the volume of air delivered through upper dispensing duct 270 relative to that delivered through the lower dispensing duct 280.

Referring to Figure 8 of the drawing, it will be noted that the distance **W2** between the front wall 216 and the edge 232 of the conveyor is sufficiently wide to provide a walk way extending longitudinally through cooking chamber 214 providing access to upper and lower air dispensing ducts 270 and 280 and to the conveyor 230 for cleaning and maintenance. The walk way **W,** having a width **W2**, forms an air return route for air delivered downwardly through plenum 254 and directed upwardly through openings in the lower air dispensing duct 280 toward the lower surface of conveyor 230 or pans of food products carried thereon. The plenum 254 has a width **W1,** as illustrated in Figure 8. The width **W2** between the edge of conveyor 230 and the front wall 216 is preferably equal to or greater than the width **W1** of plenum 254 to assure that air delivered from the lower air dispensing duct 280 is provided with a route for returning to the intake 244 of blower 260 without interfering with flow of air from the air dispensing ducts 280 toward the lower surface of conveyor 230.

As illustrated in Figures 8, 9 and 10 of the drawing, conveyor belt 230 is supported by rollers 130 rotatably supported in mountings 140 mounted on a track 150.

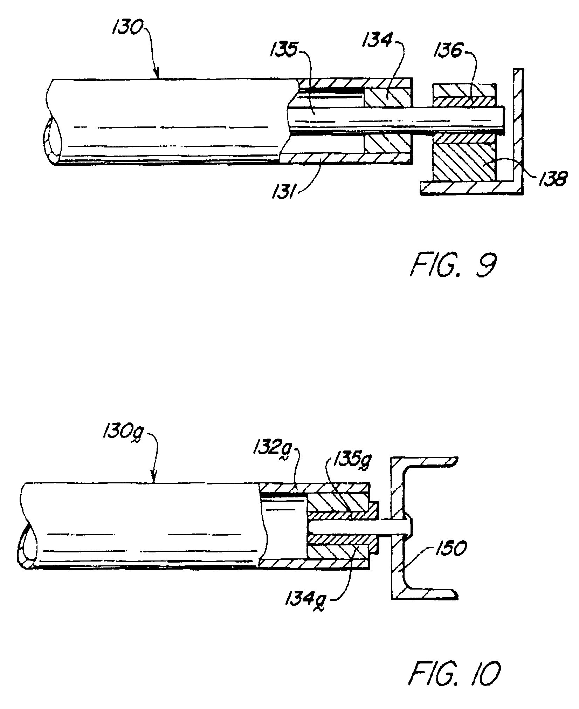

The roller generally designated by the numeral 130 in Figure 9 of the drawing comprises a hollow tubular sleeve 131 having ends closed by cylindrical plugs 134 having apertures formed therein through which a shaft 135 extends. The end of shaft 135 extends through a bearing sleeve 136 supported in a bearing block 138.

The bearing sleeve 136 is preferably formed of carbon, polyimide compound or other material capable of withstanding relatively high temperatures, for example, 204 C (400°F). Some ball and roller bearings have been designed to operate at high temperatures. However, the bearings require maintenance for cleaning, lubrication and removal of worn parts.

The provision of a walk way having width **W2** provides access to one end of the rollers. The split bearing blocks can be opened allowing replacement of sleeve, roller, ball or other bearings. The bearings attached to or included in the opposite end of the rollers can be serviced from the walkway by removing and replacing the roller from one end.

A second form of roller, generally designated by the numeral 130a, is illustrated in Figure 10 of the drawing. This roller comprises a hollow elongated sleeve 132a having a bearing cap 134a closing the end thereof. The bearing cap has a central aperture for receiving bearing sleeve 135a which is supported on a pin 138 welded or otherwise secured to a rail 150 extending longitudinally of the cooking chamber 214.

From the foregoing it should be readily apparent that the space **W2** between the edge of conveyor 230 and the front wall 216 is proportional to the width of the conveyor 230. The area of the air return path, assuming chat conveyor 230 is impervious or substantially all of its area is covered by baking pans, is substantially equal to the width **W2** of walkway **W** times the length of the cooking chamber 214. The area of the return path is preferably equal to two to five times the sum of the areas of dispensing openings through which air is dispensed from dispensing ducts 280. A representative wide oven may have 4% orifice area compared to the area of the product upon which air is dispensed through dispensing duct 280 plus the space between the finger and an adjacent finger 280. For example, in a 3,66 m (twelve foot) wide oven with 4% times 4 times equals a minimum 584 mm (23 inch) wide air return space **W2** between the conveyor and front wall 216.

Many bakery ovens presently in use are cleaned with long vacuum tools. Some ovens are provided with very inconvenient entrance ways through a small port requiring that service personnel crawl under the conveyor for cleaning and maintenance. The walkway hereinbefore described provides much more convenient access for cleaning and maintaining the oven.

## Claims

1. A tunnel oven (200) comprising: a cooking compartment (214), said cooking compartment having spaced-apart side walls; means to control temperature of air in said compartment; a conveyor (230) having edges (232) that define the width of the conveyor, upper and lower surfaces, said upper surface lying in a plane in said cooking compartment (214), said conveyor (230) being adapted to transport food through said compartment (214); spaced rollers (130) for supporting said conveyor; bearing means (136, 138) inside said cooking compartment rotatably supporting said rollers; an air distribution chamber (240) spaced from said conveyor; blower means (260) adapted to draw air from said cooking compartment (240) and to discharge air into said air distribution chamber (240) in a plane generally parallel to the plane of said conveyor (230); a plenum (254) in said cooking compartment (214) adjacent one edge of said conveyor (230); a plurality of air dispensing ducts (280) having air dispensing openings communicating with said plenum (254) for dispensing air toward said conveyor (230), said conveyor (230) being spaced from at least one of said side walls of said cooking compartment a distance that is proportional to the width of said conveyor (230), permitting passage of air adjacent an edge of the conveyor enroute to said blower without interfering with flow of air from said air dispensing ducts (280) toward said conveyor (230), Characterized in that said space between said conveyor (230) and said at least one side wall provides a continuous walkway extending longitudinally of the complete length of the cooking compartment that facilitates maintenance and replacement of said rollers and bearing means, and in that the oven comprises a door adjacent one or both ends only thereof on the walkway side of the conveyor to provide end access to the walkway to maintenance personnel.

2. A tunnel oven according to claim 1, said bearing means comprising: a split bearing block (138); and a graphite sleeve (136).

3. A tunnel oven according to claim 1 or claim 2, wherein said plenum (254) is formed by spaced walls (246) extending longitudinally of said cabinet adjacent one edge of said conveyor (230).

4. A tunnel oven according to any one of claims 1 to 3, with the addition of: means to control humidity of air in said cooking compartment.

5. A tunnel oven according to any one of claims 1 to 4, with the addition of: a plurality of cooking compartments; means routing said conveyor sequentially through each of said cooking compartments.

6. A tunnel oven according to any one of claims 1 to 5 wherein the area of the walkway permitting the passage of air to the blower is between two and five times the sum of the areas of the air dispensing openings.

## Patentansprüche

1. Tunnelofen (200) umfassend: ein Kochabteil (214), wobei das Kochabteil beabstandete Seitenwände aufweist; eine Einrichtung zum Steuern der Temperatur der Luft in dem Abteil; einen Förderer (230) mit Kanten (232), welche die Breite des Förderers definieren, oberen und unteren Flächen, wobei die obere Fläche in einer Ebene in dem Kochabteil (214) liegt, wobei der Förderer (230) angepaßt ist zum Transportieren von Nahrungsmitteln durch das Abteil (214); beabstandete Walzen (130) zum Stützen des Förderes; Lagereinrichtungen (136, 138) innerhalb des Kochabteils, welche die Walzen drehbar stützen; eine Luftverteilungskammer (240), welche von dem Förderer beabstandet ist; eine Gebläseeinrichtung (260), welche angepaßt ist, um Luft anzusaugen von dem Kochabteil (240) und zum Ausstoßen von Luft hinein in die Luftverteilungskammer (240) in einer Ebene, welche im wesentlichen parallel zu der Ebene des Förderers (230) ist; ein Luftverteilergehäuse (254) in dem Kochabteil (214) benachbart zu einer Kante des Förderers (230); eine Vielzahl von luftausstoßenden Kanälen (280) mit luftausstoßenden Öffnungen, welche mit dem Luftverteilergehäuse (254) kommunizieren zum Ausstoßen von Luft in Richtung des Förderers (230), wobei der Förderer (230) zumindest von einer der Seitenwände des Kochabteils beabstandet ist, und zwar bei einem Abstand, welcher proportional zu der Breite des Förderers (230) ist, wobei der Durchgang von Luft benachbart einer Kante des Förderers, in Richtung zu dem Gebläse erlaubt wird, ohne mit dem Luftstrom von den luftausstoßenden Kanälen (280) in Richtung des Förderers (230) zu interferieren, dadurch gekennzeichnet, daß der Raum zwischen dem Förderer (230) und der zumindest einen Seitenwand einen kontinuierlichen Durchgang bereitstellt, welcher sich longitudinal über die gesamte Länge des Kochabteils erstreckt, wodurch die Wartung und die Ersetzung der Walzen und Lagereinrichtungen vereinfacht wird, und daß der Ofen eine Tür umfaßt, benachbart zu nur einem oder nur beiden Enden davon, und zwar an der Durchgangsseite des Förderers zum Bereitstellen eines Endzuganges zu dem Durchgang für Wartungspersonal.

2. Tunnelofen gemäß Anspruch 1, wobei die Lagereinrichtungen umfassen: einen Deckellagerklotz (138); und eine Graphithülse (136).

3. Tunnelofen gemäß Anspruch 1 oder Anspruch 2, wobei das Luftverteilergehäuse (254) durch beabstandete Wände (246) gebildet ist, welche sich longitudinal der Kammer erstrecken, und zwar benachbart zu einer Kante des Förderers (230).

4. Tunnelofen gemäß einem der Ansprüche 1 bis 3, mit dem Zusatz von: Einrichtungen zum Steuern der Feuchtigkeit der Luft in dem Kochabteil.

5. Tunnelofen gemäß einem der Ansprüche 1 bis 4, mit dem Zusatz von: einer Vielzahl von Kochabteilen, Einrichtungen, welche den Förderer sequenziell durch jedes der Kochabteile führen.

6. Tunnelofen gemäß einem der Ansprüche 1 bis 5, wobei der Bereich des Durchganges, welcher den Durchgang von Luft zu dem Gebläse erlaubt zwischen zwei- und fünfmal der Summe der Bereiche der luftausstoßenden Öffnungen beträgt.

## Revendications

1. Four tunnel (200) comprenant :
un compartiment de cuisson (214), ledit compartiment de cuisson ayant des parois latérales espacées l'une de l'autre ; un moyen pour commander la température de l'air dans ledit compartiment ; un transporteur (230) ayant des bords (232) qui définissent la largeur du transporteur, des surfaces supérieure et inférieure, ladite surface supérieure se trouvant dans un plan dans ledit compartiment de cuisson (214), ledit transporteur (230) étant apte à transporter des aliments à travers ledit compartiment (214) ; des rouleaux espacés (130) destinés à supporter ledit transporteur ; des moyens formant palier (136, 138), se trouvant à l'intérieur dudit compartiment de cuisson, supportant en rotation lesdits rouleaux ; une chambre de répartition d'air (240), espacée dudit transporteur : un moyen formant soufflante (260) apte à aspirer de l'air dudit compartiment de cuisson (240) et à refouler de l'air dans ladite chambre de répartition d'air (240) dans un plan globalement parallèle au plan dudit transporteur (230) ; un diffuseur (254) se trouvant dans ledit compartiment de cuisson (214), dans une position adjacente à un bord dudit transporteur (230) ; une pluralité de conduits de distribution d'air (280) ayant des ouvertures de distribution d'air communiquant avec ledit diffuseur (254) afin de distribuer de l'air vers ledit transporteur (230), ledit transporteur (230) étant espacé d'au moins une desdites parois latérales dudit compartiment de cuisson d'une distance qui est proportionnelle à la largeur dudit transporteur (230), permettant le passage d'air à proximité d'un bord du transporteur en direction de ladite soufflante sans interférer avec l'air s'écoutant desdits conduits de distribution d'air (280) vers ledit transporteur (230), caractérisé en ce que ledit espace entre ledit transporteur (230) et ladite ou lesdites paroi(s) latérale(s) forme une passerelle continue s'étendant longitudinalement sur la longueur entière du compartiment de cuisson, ce qui facilite la maintenance et le remplacement desdits rouleaux et desdits moyens formant palier, et en ce que le four comprend une porte, adjacente à une ou à deux extrémités seulement de celui-ci, sur le côté passerelle du transporteur, afin de permettre un accès par l'extrémité à la passerelle pour le personnel de maintenance.

2. Four tunnel selon la revendication 1, lesdits moyens formant palier comprenant : un bloc palier en deux pièces (138) ; et un coussinet en graphite (136).

3. Four tunnel selon la revendication 1 ou la revendication 2, dans lequel ledit diffuseur (254) est formé par des parois espacées (246) s'étendant dans la direction longitudinale de ladite enceinte, dans des positions adjacentes à un bord dudit transporteur (230).

4. Four tunnel selon l'une quelconque des revendications 1 à 3, comprenant en outre : un moyen pour commander l'humidité de l'air dans ledit compartiment de cuisson.

5. Four tunnel selon l'une quelconque des revendications 1 à 4, comprenant en outre : une pluralité de compartiments de cuisson ; un moyen pour acheminer ledit transporteur successivement à travers chacun desdits compartiments de cuisson.

6. Four tunnel selon l'une quelconque des revendications 1 à 5, dans lequel la surface de la passerelle permettant le passage de l'air jusqu'à la soufflante fait entre deux et cinq fois la somme des surfaces des ouvertures de distribution d'air.
